# EUROPEAN PATENT SPECIFICATION

(11) **EP 3 068 862 B1**
(45) Date of publication and mention of the grant of the patent: **17.04.2024**
(21) Application number: 14863030.4
(22) Date of filing: 17.11.2014
(51) Int. Cl.: C11D 13/00, C11D 15/04, C08L 93/04, C08K 5/098, C11D 9/26, C11C 1/02, C11C 3/00

(54) **METHOD FOR PRODUCING SOAP FROM FATTY AND RESIN ACIDS, AND A SOAP COMPOSITION THEREOF**
VERFAHREN ZUR HERSTELLUNG EINER HARZ- UND FETTHALTIGEN SEIFE SOWIE FETTSÄURE-SEIFENZUSAMMENSETZUNG UND VERWENDUNG DAVON
PROCÉDÉ POUR LA PRODUCTION DE SAVON D'ACIDES GRAS RÉSINIQUES, COMPOSITION DE SAVON D'ACIDES GRAS ET SON UTILISATION

(30) Priority: 15.11.2013 FI 20136135
(43) Date of publication of application: 21.09.2016
(73) Proprietor: Forchem Oyj, 26101 Rauma (FI)
(72) Inventor: RINTOLA, Mikko, FI-26101 Rauma (FI); ORTE, Juha, FI-26101 Rauma (FI)
(74) Representative: Laine IP Oy
(86) International application number: PCT/FI2014/050866
(87) International publication number: WO 2015/071549

(56) References cited:
- WO-A1-2013/060936
- GB-A- 1 116 966
- JP-A- S5 725 400
- US-A- 3 360 471
- US-A- 3 360 471
- US-A- 3 859 107
- DATABASE WPI Week 198212 1982 Thomson Scientific, London, GB; AN 1982-22646E XP002770046, & JP S57 25400 A (UEHARA KAGAKU KK) 10 February 1982 (1982-02-10)

## Description

### Field of the invention

The present invention is defined by the claims and relates to fatty acid compositions and their manufacture. In particular, the invention relates to a method for the saponification of a resinous fatty acid to an alkali salt of resin acid and fatty acid. The invention relates also to new fatty acid products derived from the method and their use.

### Description of related art

In general, resin acids refer to water-insoluble amorphous, solid or liquid plant secretions. Regarding their chemical structure, they are long-chain organic carbon compounds having a backbone structure based on three rings, each formed by six carbon atoms. As well known, resin acids possess antimicrobial/antibacterial properties, which is the reason why they are frequently used for the production of various disinfectant soaps and compositions. For example, the Finnish patent application FI 20120287 discloses an antimicrobial aqueous mixture composition consisting of certain resin acids (such as dehydroabietic acid) and applicable as a medicinal or conditioning agent or additive in various technical products (such as cleaning agents).

Fatty acids are fatty acid esters of plant or animal origin and long-chain monocarboxylic acids formed from hydrocarbons derived from these, possessing the general formula R-COOH, in which R is an aliphatic hydrocarbon chain. Based on the presence or absence of double bonds, fatty acids are traditionally classified into unsaturated, saturated and polyunsaturated fatty acids.

Fatty acids are commonly isolated from fatty acid ester sources, such as e.g. vegetable oil triglycerides, by hydrolysis. Fatty acid soap has been traditionally manufactured by mixing together fatty acid, water and an alkaline hydroxide. The method is problematic, for example due to rapidly increasing viscosity, whereby it is difficult or almost impossible upon processing of the product to achieve higher dry matter concentrations allowing transfer in liquid (pumpable) form. On the other hand, low dry matter content results in a low processing capacity and thus raises the energy costs of the process upon further refining of the product, for instance by drying it into the dry matter form.

The increase in viscosity can to some extent be controlled by changing the metal hydroxide utilized for saponification and by elevating the processing temperature. For instance, exchanging sodium for potassium is known to decrease viscosity both in processing and in the obtained soap product. The adjustment of viscosity in the process by known techniques is, however, very limited, and high dry matter contents are not achieved.

US Patent 2,558,543 discloses a partial saponification of crude tall oil, in which according to example 3, 100 parts of crude tall oil was mixed into a solution containing 6.1 parts of NaOH, which had been dissolved in 45 parts of water and 5 parts of isopropanol, whereby partial saponification of the tall oil solution was achieved. The mixture thus obtained was fed into countercurrent extraction, in which the resin acid was extracted into gasoline.

US Patent 3,804,819 discloses the recovery of fatty acids from tall oil distillation heads, where the fatty acids contained in the heads are saponified with an aqueous base to form a fatty acid soap into the aqueous stage. In the saponification, a wetting component (wetting agent) such as a lower alcohol is utilized, amounting to 10 to 40 weight-% of the saponification reaction mixture. Described in example 1 is a mixture, in which 20 weight-% of the tall oil distillation heads are mixed with 60 parts by weight of water, 20 parts by weight of isopropanol and 3.7 parts by weight of sodium hydroxide.

Disclosed in the JP Patent S5725400 is the manufacture of liquid soap, in which a mixture of tall oil fatty acids and resin acids is saponified with soybean oil and coconut oil. A KOH solution and a polar solvent (1 to 10 m-%) are utilized for the saponification. However, the publication does not describe an energy-efficient process, by which a low-viscosity fatty acid soap comprising a high dry matter content is achieved.

US Patent 3,360,471 discloses a liquid cleaning compound concentrate base, which is readily soluble and dispersible in water, and which contains substantially less amounts of water than conventional cleaning compounds; and the method of making such a concentrate base. The method comprises dissolving tall oil in a tri propylene glycol methyl ether solvent and reacting the tall oil dissolved in the solvent with lye to form tall oil soaps.

Fatty acid compositions obtainable by known art possess low solid matter content; the dry matter content of fatty acid soap normally remains below approximately 24 weight percent at the maximum. For this reason the production, transportation and eventual concentration is expensive and time-consuming. Significant savings are achieved for example by carrying out the technical implementation of the product and method of the Finnish patent application FI 20125509 according to the present invention.

### Summary of the invention

The present invention is based on the idea that a fatty acid comprising resin acids is dissolved in a solvent- and water-containing alkaline reagent solution. A polar solvent is chosen as the solvent.

Examples of suitable solvents include primary C₁-C₄ alcohols and secondary alcohols such as isopropanol or acetone and their mixtures. Saponification can be performed by using any known alkaline hydroxide.

A sufficient amount of water enabling the saponification of all resin and fatty acids should be used or formed in the process. Water is most preferably used in such an amount that esterification of fatty acids cannot take place. The water content of the mixture formed in the reaction is 1 to 30 weight-%.

The reaction mixture can be recovered as such, after adjustment of pH, or after purification such as bleaching treatment, or can be dried.

By applying the invention a low-viscosity composition comprising fatty and resin acid soap is obtained having high dry matter content, generally over 30 weight-%, in particular about 40 to 70 weight-%. The composition comprises a polar solvent. The solvent content is about 10 to 50 % of the total weight of the composition.

More specifically, the method according to the present invention is characterized by what is stated in the characterizing part of claim 1.

The composition comprising fatty and resin acid soap is in turn characterized by what is stated in claim 17.

The use according to the invention is characterized as stated in claim 21.

Significant benefits are achieved with the invention. Accordingly, the present solution provides a process in which the manufacture of soap from fatty acid, such as tall oil fatty acid, is made substantially easier. By using the method according to the invention a processable fatty acid soap having a dry matter content of up to 60 percent by weight can be achieved by replacing the traditionally used water at least partially with a solvent.

One of the advantages of the present invention is also the low viscosity of the composition, whereby technical processibility, production costs and reactivity of saponification is better compared with normal saponification carried out in water. The solvent, such as an alcohol, does not participate in the reaction, but instead functions solely as a dissolving component, whereby it can be either totally or partially removed after saponification. Recycling of the solvent in the process is also possible.

Due to the lowered viscosity, an up to threefold dry matter content is achieved in the reaction. Accordingly, the capacity of the processing equipment both in the reaction and the optional drying stage increases, or the size of the equipment to be invested can correspondingly be decreased. In addition, the amount of energy used for the process decreases.

The composition of the invention comprising fatty and resin acid soap can be used as a generally disinfective or antiseptic agent for the inhibition of growth, extermination or inactivation of disease-causing microorganisms. Disclosed in certain Finnish patent applications, FI 20125509 and FI 20136113, is a particular application, for which significant benefit is achieved in the technical implementations of at least one embodiment in the production of fatty and resin acid soap as described in the present invention.

As stated above, it is known in the art to use water/alcohol mixtures together with lye for the saponification of tall oil. The high fatty and resin acid salts content (dry matter content) characteristic of the present invention is, however, achieved with a considerably smaller amount of water and higher amount of alcohol, respectively, than what is disclosed in the known art.

Next, the present technology will be described more closely with the aid of the appended drawings.

### Brief description of the drawings

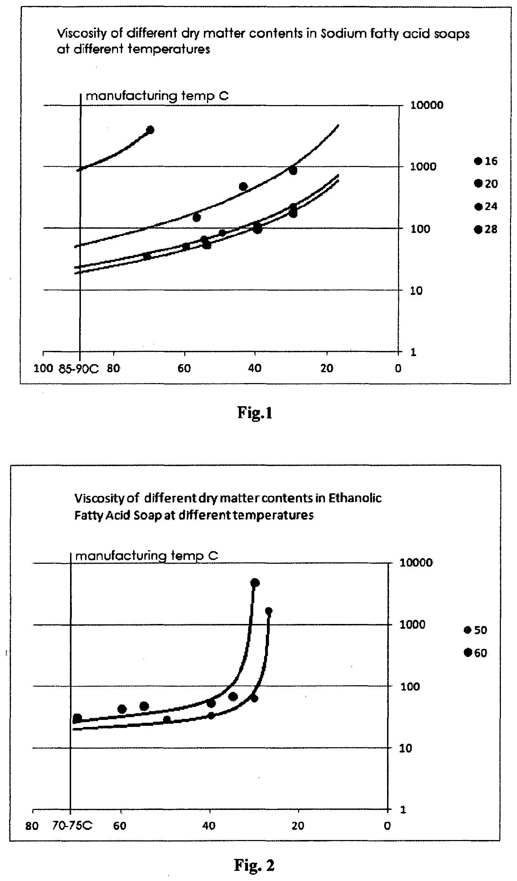

Shown in Figure 1 is a diagram indicating the change in viscosity of a sodium salt of a resin-containing fatty acid (soap) produced by a conventional method involving a high water content at different temperatures and dry matter contents of 16 to 28 %.

Shown in Figure 2 is a diagram indicating how the viscosity of a sodium salt of a resin-containing fatty acid produced by the solvent method of the present invention changes at different temperatures and dry matter contents of 50 to 70 %.

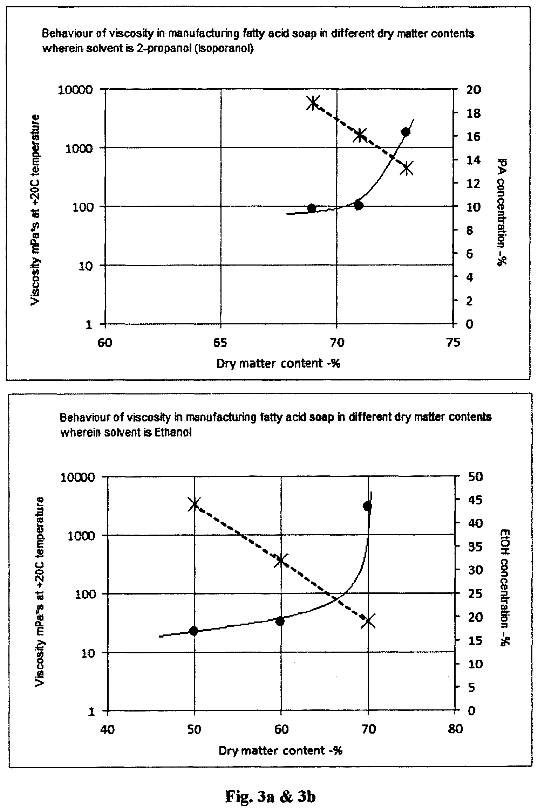

Figures 3a and 3b show diagrams depicting the viscosity and solvent content of a fatty acid sodium salt at dry matter contents of 50 to 70 %. The viscosities have been measured at a processing temperature of 70°C, using 2-propanol (Fig. 3a) and ethanol (Fig. 3b), respectively, as solvent.

### Preferred embodiments

In the method according to the present invention, which is defined by the claims, a resinous fatty acid soap is manufactured by mixing together a resin acid and a fatty acid, water, a solvent and an alkaline hydroxide. In the method the solvent used to partially replace the water strongly decreases the viscosity of the mixture during processing, whereby substantially larger increase in the amount of fatty acid is possible as compared with the conventional way of processing.

In addition to the high dry matter content, the partial replacement of water with solvent decreases the need of energy utilized in the optional drying process. Since the solvent does not participate in the actual reaction in the saponification reaction, it is essentially not consumed and can also be efficiently recycled despite the generated azeotropic mixtures. The solvent and the water can also be removed after the reaction either completely or partially.

In a method of the invention the soap is manufactured from fatty and resin acids, according to which method a composition comprising fatty and resin acids is saponified with alkali. In the method an alkaline solution comprising water, a polar solvent and a base is first prepared and then subjected to high-shear forces, i.e. the fatty acid composition is added under vigorous stirring in order to dissolve the acids contained therein into the alkaline solution. The water content of the alkaline solution is kept high enough to prevent the formation of fatty acid esters and to saponify the fatty and resin acids. Saponification is continued until a significant proportion of the fatty acids have been saponified. Specifically this means that saponification is continued until at least 50 weight-%, preferably over 80 weight-% and most preferably over 95 weight-% of the resin acids and fatty acids have been saponified.

According to one preferred embodiment, saponification is continued until a composition is achieved having a dry matter content of 40 to 75 weight-%, most preferably 50 to 60 weight-%, the salt of the resin acid and fatty acid constituting at least 80 weight-%, more preferably at least 90 weight-% and in particular about 92 to 99 weight-% of the dry matter of the composition.

After the optional drying process, the dried product composition has a high dry matter content, even 95 to 100 weight-%, in particular almost 100 weight-% and a correspondingly low solvent and water content of 0 to 5 weight-%, in particular almost 0 weight-%.

Any biocompatible polar solvent selected from an aliphatic or aromatic alcohol or a ketone is utilized to form the alkaline solution.

According to one embodiment the solvent is an aliphatic lower alcohol, for example a C₁-C₄ alcohol, especially methanol, ethanol or propanol.

In another embodiment the solvent is an aliphatic lower ketone, such as acetone.

As the alkali for forming the alkaline solution for example a hydroxide is used, such as an alkali metal hydroxide, e.g. NaOH, KOH, a metal hydride such as an alkali metal hydride, e.g. NaH, or metal alkoxides, ethylate or methylate, such as CH₃ONa, or mixtures thereof.

It should be noted that changing the metal hydroxide in the method affects the viscosity of the product in a manner analogous to the conventional method. Furthermore, the composition of the solvent has a major influence on the viscosity of the reaction product. For instance, replacing sodium hydroxide with potassium hydroxide and replacing ethanol with isopropanol increases the solubility of the formed salts in the mixture.

According to one embodiment the dynamic viscosity of the mixture formed from the alkaline solution and the fatty acid composition comprising resin acids during saponification is not more than 1000 mPa·s, in particular not more than 600 mPa·s, most suitably not more than 200 mPa·s.

In the conventional saponification method prepared into the water phase typically comprising 70 to 80% of water, fatty acid product is slowly added into a metal hydroxide solution prewarmed to 60 to 70°C. If drying of the reaction product is desired, this thus requires the evaporation of a large volume of water, which is not reasonable in the sense of energy economy. According to a calculated example, a mixture of 1000 kg containing 800 kg of water requires almost 2160 MJ (600 kWh) of energy.

Saponification processes are exothermic thus they produce heat. In the solvent method of the present invention, addition of the fatty acid mixture comprising resin acids causes agglomeration of the soap, whereby soap molecules precipitate in the mixture and the temperature of the mixture will simultaneously increase. After the fatty acid has been added, the viscosity of the mixture decreases and the agglomerates dissolve in water forming, depending on the dry matter content of the solution, a fluid or gel-like liquid. In fact, a preferred embodiment involves preparing the product by adding the solvent-water-metal hydroxide mixture to a cool, e.g. 30 to 40°C fatty acid, whereby the mixture spontaneously warms up to a temperature of approx. 60 to 70°C. Furthermore, the optionally conducted evaporation process involving the evaporation of only a small amount of water and solvent consumes respectively less energy than the conventional method. According to a calculated example, a mixture of 1000 kg containing 300 kg of ethanol and 100 kg of water consumes less than 1080 MJ (300 kWh) of energy.

There is no limitation to the chemical form of the fatty acid or its fatty acid composition or degree of saturation, whereby the fatty acid can be manufactured from any source, such as e.g. from tall oil, rapeseed oil, palm oil or olive oil, or from an animal source, e.g. fish oil or beef tallow, or from intermediate or residual products obtained from processing of the above-mentioned sources, e.g. fatty acid distillate generated in connection with refining processes, and have these refined to any degree of purity and processed by any method before utilizing in the saponification process. The fatty acid can also be a mixture of conventional plant fatty acids or a mixture of fatty acids of wood or animal origin. Fatty acid can also be produced by saponifying directly from glycerides (mono-, di-, tri-) or from a mixture thereof with resin acid or from a mixture of free fatty acid and the above-mentioned glycerides, wherein glycerol or a glycerol ester is present as one of the components.

While the present invention is not limited to the origin of the fatty acid, according to a preferable embodiment use is made of tall oil fatty acid, which naturally comprises resin acids. The composition of the fatty acid product comprises 0.5 to 95 weight-%, in particular about 1 to 50 weight-% of saponified or partially free resin acids.

By applying the invention a composition comprising fatty and resin acid soap can be obtained having a dry matter content of 40 to 70 weight-%, in particular 60 to 70 weight-%, and containing about 10 to 50 %, in particular 10 to 20 weight-% of a polar, preferably anhydrous solvent based on the total weight of the composition.

In one embodiment the composition is dried to a dry matter content of 95 to 100 weight-%.

Handling and transportation of compositions having a high dry matter content is quite inexpensive, without the need of lowering their water contents e.g. by evaporating in the application.

The composition of the invention comprising fatty and resin acid soap has numerous applications. The soap product is environmentally friendly and it can be modified by choosing the appropriate solvent and process conditions according to the application. The soap can, for example, be generally used as a disinfectant or antiseptic agent against microorganisms and bacteria. According to an embodiment it is possible by using the fatty acid soap comprising resin acid to regulate the quantity of microbial population in the digestive tract of animals, by modifying soap properties to be suitable for addition into animal feed.

In the following, the present technology is described with the aid of few non-limiting examples. A skilled person should, however, understand that both the embodiments described in the description and the accompanying examples are only meant to illustrate the invention and its reproducibility. Alterations and variations are possible within the scope of the clams.

### Examples

### Example 1 (conventional manufacture of Na-soap)

100 g of fatty acid having a resin acid content of 8 weight-% was warmed to a temperature of 60°C. To the vigorously stirred prewarmed fatty acid was added slowly 472.3 g of aqueous NaOH solution (14.3 g NaOH + 458 g H₂O) having a temperature of approx. 30°C. The temperature of the mixture rose spontaneously close to 70°C, after which the mixture was heated to a temperature of 80°C, where it was stirred for 30 minutes. The 80°C mixture was next transferred into a vacuum evaporator, in which the mixture was dried at a temperature of 120°C and under 30-5 mbar vacuum.

### Example 2 (conventional manufacture of K-soap)

100 g of fatty acid having a resin acid content of 8 weight-% was warmed to a temperature of 60°C. To the vigorously stirred prewarmed fatty acid was added slowly 477.7 g of aqueous KOH solution (19.7 g KOH + 458 g H₂O) having a temperature of approx. 30°C. The temperature of the mixture rose spontaneously close to 70°C, after which the mixture was heated to a temperature of 80°C, where it was stirred for 30 minutes. The 80°C mixture was next transferred into a vacuum evaporator, in which the mixture was dried at a temperature of 120°C and under 30-5 mbar vacuum.

### Example 3

14.3 g of NaOH was dissolved in 26.5 g of water, to which was added 55 g of ethanol. The approx. 40°C solution was added into 100 g of approx. 50°C fatty acid under vigorous stirring. The temperature of the mixture rose close to 70°C, where it was stirred for 30 minutes. The 70°C mixture was next transferred into a vacuum evaporator, in which the mixture was dried at a temperature of 90°C and under 30-5 mbar vacuum.

### Example 4

19.7 g of KOH was dissolved in 20 g of water, to which was added 45 g of ethanol. The approx. 40°C solution was added into 100 g of approx. 50°C fatty acid under vigorous stirring. The temperature of the mixture rose close to 70°C, where it was stirred for 30 minutes. The 70°C mixture was next transferred into a vacuum evaporator, in which the mixture was dried at a temperature of 90°C and under 30-5 mbar vacuum.

### Example 5

14.2 g of NaOH was dissolved in 20 g of water, to which was added 50 g of 2-propanol. The approx. 40°C solution was added into 98 g of approx. 50°C fatty acid under vigorous stirring. The temperature of the mixture rose close to 70°C, where it was stirred for 30 minutes. The 70°C mixture was next transferred into a vacuum evaporator, in which the mixture was dried at a temperature of 90°C and under 30-5 mbar vacuum.

### Example 6

19.7 g of KOH was dissolved in 15 g of water, to which was added 35 g of 2-propanol. The approx. 40°C solution was added into 100 g of approx. 50°C fatty acid under vigorous stirring. The temperature of the mixture rose close to 70°C, where it was stirred for 30 minutes. The 70°C mixture was next transferred into a vacuum evaporator, in which the mixture was dried at a temperature of 90°C and under 30-5 mbar vacuum.

### Example 7

14.3 g of NaOH was dissolved in 20 g of water, to which was added 55 g of 1-butanol. To the approx. 40°C solution was added 100 g of approx. 20°C fatty acid under vigorous stirring for 10 minutes. The mixture was transferred into a vacuum evaporator, in which the mixture was dried at a temperature of 90°C and under 30-5 mbar vacuum.

### Example 8

19.7 g of KOH was dissolved in 20 g of water, to which was added 35 g of 1-butanol. To the approx. 40°C solution was added 100 g of approx. 20°C fatty acid under vigorous stirring for 10 minutes. To the gel-like liquid were added with stirring 95% of water, whereby the working solution obtained was diluted to a disinfectant cleaning agent.

### Example 9

To 100 g of 20°C fatty acid were mixed 35 g of 20°C 1-butanol. To the resulting solution was added under vigorous stirring 39.7 g of approx. 55°C aqueous 49.6% KOH solution, whereby the temperature of the solution rose to 65°C. Stirring was continued for 20 minutes, after which the approx. 45°C solution was transferred into a vacuum evaporator, in which it was dried at a temperature of 90°C and under 30-5 mbar vacuum.

### Example 10

19.7 g of KOH were dissolved in 20 g of water, to which was added 55 g of acetone. To the approx. 40°C solution was added 100 g of approx. 20°C fatty acid under vigorous stirring for 10 minutes. The reaction is exothermic and was carried out under continuous cooling of the reaction mixture. The evaporating solvent was condensed and returned to the reaction. To the gel-like liquid was added with stirring 95% of water, whereby the working solution obtained was diluted to a disinfectant cleaning agent.

### Example 11

8 g of resin (FOR90/Forchem Oy) was dissolved in 45 g of hot 70°C ethanol, 19.7 g of KOH and 20 g of water. The resin was saponified by mixing the hot, approx. 70°C mixture into a solution for approx. 30 minutes. To the resulting solution were added 92 g of mixed fatty acid distillate of vegetable oil (Deodorizer distillate), which was saponified in an analogous manner by stirring the mixture vigorously for approx. 30 minutes.

### Example 12

8 g of resin (FOR90/Forchem Oy) was dissolved in 45 g of hot 70°C ethanol. To the solution was added 20 g of water and 19.7 g of KOH to saponify the resin. To the resulting solution was added 92 g of rapeseed oil (triglyceride, RBD Ravintoraisio Oy).

### Example 13

30 g of resin (FOR90 /Forchem Oy) was dissolved and saponified in 50 g of isopropanol, to which had been added 19 g of KOH and 5 g of water. To this mixture was slowly added under vigorous stirring 70 g of rapeseed oil (triglyceride RBD Ravintoraisio Oy)

By way of example, tall oil fatty acid, solvent, water and alkali can be used in the method according to the proportions shown in Table 1.

**Table 1. Proportions of components in the reaction mixture according to different alternatives**

| Component | alternative 1 min-max % | alternative 2 min-max % | alternative 3 min-max % |
|---|---|---|---|
| RH* | 40-60 | 45-55 | 45-55 |
| Solvent | 15-50 | 15-40 | 15-30 |
| Water | 3-30 | 6-20 | 8-15 |
| Alkali | 7-20 | 7-10 | 7-10 |

| | | | |
|---|---|---|---|
| * RH = Fatty acid mixture comprising resin acids | | | |

### Cited references - Patent literature:

1. FI 20120287
2. US 2,558,543 A
3. US 3,804,819 A
4. JP S5725400 A
5. US 3,360,471 A
6. FI 20125509
7. FI 20136113

## Claims

1. A method for manufacturing a soap from fatty and resin acids, according to which method a composition comprising fatty and resin acids is saponified with an alkali,
**characterized in that**
- an alkaline solution comprising water, a polar solvent selected from an aliphatic or aromatic alcohol or a ketone, and a base is formed, and
- a fatty acid composition comprising resin acids is added to the alkaline solution in order to dissolve the acids contained therein into the alkaline solution, whereby the water content of the of the mixture formed by the alkaline solution and the fatty acid composition is 1 to 30 weight-%.

2. The method according to claim 1, **characterized in that** saponification is continued until at least 50 weight-%, preferably over 80 weight-%, most preferably over 95 weight-% of the resin acids and fatty acids have been saponified.

3. The method according to claim 1 or 2, **characterized in that** the fatty acid composition is added under vigorous stirring into the alkaline solution and stirring is preferably continued until a significant proportion of the fatty acids has been saponified.

4. The method according to any of claims 1 to 3, **characterized in that** the fatty acid composition comprising resin acids is a composition comprising fatty acids of vegetable or animal origin, such as a rapeseed oil, a palm oil, an olive oil, or a composition comprising tall oil fatty acids, or a mixture thereof.

5. The method according to any of the preceding claims, **characterized in that** the polar solvent used for forming the alkaline solution is an aliphatic lower alcohol or an aliphatic lower ketone, for example a C₁-C₄ alcohol, in particular methanol, ethanol, propanol or butanol, or acetone.

6. The method according to any of the preceding claims, **characterized in that** the alkali used for forming the alkaline solution is a hydroxide, such as NaOH or KOH, a metal hydride, such as NaH, or an ethylate or a methylate, such as CH₃ONa.

7. The method according to any of the preceding claims, **characterized in that** the dynamic viscosity of the mixture formed by the alkaline solution and the fatty acid composition during saponification is not more than 1000 mPa·s, in particular not more than 600 mPa·s, most suitably not more than 200 mPa•s.

8. The method according to any of the preceding claims, **characterized in that** the water content of the mixture formed by the alkaline solution and the fatty acid composition is 6 to 20 weight-%, in particular 8 to 15 weight-% of the total weight of the composition.

9. The method according to any of the preceding claims, **characterized in that** the solvent content of the mixture formed by the alkaline solution and the fatty acid composition is 15 to 50 weight-%, most preferably 15 to 40 weight-%, in particular 20 to 30 weight-% of the total weight of the composition.

10. The method according to any of the preceding claims, **characterized in that** the fatty acid composition is added into the alkaline solution, which is subjected to high-shear forces.

11. The method according to any of the preceding claims, **characterized in that** the alcohol of the alkaline solution is not essentially consumed during saponification, and that the alcohol functions as a solvent for the saponification and is completely or partially removed, or recycled after the reaction.

12. The method according to any of the preceding claims, **characterized in that** saponification is continued until a composition is achieved having a dry matter content of at least 40 weight-%, most preferably between 50 and 60 weight-%, of which dry matter the fatty acid soap constitutes at least 20 weight-%, more preferably at least more than 50 weight-%, in particular about 80 to 99 weight-%.

13. The method according to any of the preceding claims, **characterized in that** at least 80 weight-%, more preferably at least 90 weight-% of the acids are saponified.

14. The method according to any of the preceding claims, **characterized in that** a composition is recovered, which is a composition obtained from the saponification of fatty and resin acids, and which comprises 0.5 to 95 weight-%, in particular about 1 to 35 weight-% of saponified resin acids.

15. The method according to any of the preceding claims, **characterized in that** the soap is manufactured from fatty and resin acids of tall oil, wherein the tall oil composition comprising fatty and resin acids is saponified with an alkali.

16. The method according to any of the preceding claims, **characterized in that** the composition is dried to a dry matter content of 95 to 100 weight-%.

17. A composition manufactured according to a method of any of claims 1 to 16 comprising fatty and resin acid soap, having a dry matter content of 60 to 70 weight-% and comprising 10 to 20 weight-% of a polar solvent based on the total weight of the composition, wherein the polar solvent is an aliphatic or aromatic alcohol or a ketone, such as an aliphatic lower alcohol or an aliphatic lower ketone, for example a C₁-C₄ alcohol, in particular methanol, ethanol, propanol or butanol, or acetone.

18. The composition according to claim 17, **characterized in that** it has a dry matter content of 95 to 100 weight-%.

19. The composition according to claim 17 or 18, **characterized in that** the composition comprises 0.5 to 95 weight-%, in particular about 1 to 35 weight-% of saponified resin acids.

20. The composition according to any of claims 17 to 19, **characterized in that** it is obtained by a method according to any of claims 1 to 16.

21. Use of a composition manufactured according to any of claims 1 to 16 or of a composition according to any of claims 17 to 20 as a disinfectant or antiseptic agent or as a concentrate thereof.

22. The use according claim 21, **characterized in that** the composition being used comprises ethanol or a corresponding biocompatible substance as a solvent.

## Patentansprüche

1. Verfahren zum Herstellen einer Seife aus Fett- und Harzsäuren, gemäß welchem Verfahren eine Fett- und Harzsäuren umfassende Zusammensetzung mit einem Alkali verseift wird, **dadurch gekennzeichnet, dass**
- eine alkalische Lösung, umfassend Wasser, ein polares Lösungsmittel, ausgewählt aus einem aliphatischen oder aromatischen Alkohol oder einem Keton, und eine Base gebildet wird, und
- eine Harzsäuren umfassende Fettsäurezusammensetzung der alkalischen Lösung zugesetzt wird, um die darin enthaltenen Säuren in der alkalischen Lösung aufzulösen, wobei der Wassergehalt der aus der alkalischen Lösung und der Fettsäurezusammensetzung gebildeten Mischung 1 bis 30 Gew.-% beträgt.

2. Verfahren nach Anspruch 1, **dadurch gekennzeichnet, dass** die Verseifung fortgesetzt wird, bis zumindest 50 Gew-%, vorzugsweise über 80 Gew.-%, am meisten bevorzugt über 95 Gew.-% der Harzsäuren und Fettsäuren verseift sind.

3. Verfahren nach Anspruch 1 oder 2, **dadurch gekennzeichnet, dass** die Fettsäurezusammensetzung unter kräftigem Rühren der alkalischen Lösung zugesetzt wird und das Rühren vorzugsweise so lange fortgesetzt wird, bis ein erheblicher Anteil der Fettsäuren verseift ist.

4. Verfahren nach einem der Ansprüche 1 bis 3, **dadurch gekennzeichnet, dass** die Harzsäuren umfassende Fettsäurezusammensetzung eine Zusammensetzung ist, welche Fettsäuren pflanzlichen oder tierischen Ursprungs umfasst, wie ein Rapsöl, ein Palmöl, ein Olivenöl oder eine Zusammensetzung, umfassend Tallölfettsäuren oder eine Mischung davon.

5. Verfahren nach einem der vorstehenden Ansprüche, **dadurch gekennzeichnet, dass** das zur Bildung der alkalischen Lösung verwendete polare Lösungsmittel ein aliphatischer niederer Alkohol oder ein aliphatisches niederes Keton, zum Beispiel ein C₁-C₄₋Alkohol, insbesondere Methanol, Ethanol, Propanol oder Butanol oder Aceton ist.

6. Verfahren nach einem der vorstehenden Ansprüche, **dadurch gekennzeichnet, dass** das zur Bildung der alkalischen Lösung verwendete Alkali ein Hydroxid, wie NaOH oder KOH, ein Metallhydrid, wie NaH, oder ein Ethylat oder ein Methylat, wie CH₃ONa ist.

7. Verfahren nach einem der vorstehenden Ansprüche, **dadurch gekennzeichnet, dass** die dynamische Viskosität der aus der alkalischen Lösung und der Fettsäurezusammensetzung gebildeten Mischung bei der Verseifung nicht mehr als 1000 mPa s, insbesondere nicht mehr als 600 mPa s, am meisten geeignet nicht mehr als 200 mPa s beträgt.

8. Verfahren nach einem der vorstehenden Ansprüche, **dadurch gekennzeichnet, dass** der Wassergehalt der aus der alkalischen Lösung und der Fettsäurezusammensetzung gebildeten Mischung 6 bis 20 Gew.-%, insbesondere 8 bis 15 Gew.-% des Gesamtgewichts der Zusammensetzung beträgt.

9. Verfahren nach einem der vorstehenden Ansprüche, **dadurch gekennzeichnet, dass** der Lösungsmittelgehalt der aus der alkalischen Lösung und der Fettsäurezusammensetzung gebildeten Mischung 15 bis 50 Gew.-%, am meisten bevorzugt 15 bis 40 Gew.-%, insbesondere 20 bis 30 Gew.-% des Gesamtgewichts der Zusammensetzung beträgt.

10. Verfahren nach einem der vorstehenden Ansprüche, **dadurch gekennzeichnet, dass** die Fettsäurezusammensetzung der alkalischen Lösung zugesetzt wird, welche hohen Scherkräften ausgesetzt wird.

11. Verfahren nach einem der vorstehenden Ansprüche, **dadurch gekennzeichnet, dass** der Alkohol der alkalischen Lösung bei der Verseifung nicht wesentlich verbraucht wird und dass der Alkohol als Lösungsmittel für die Verseifung fungiert und nach der Reaktion ganz oder teilweise entfernt oder recycelt wird.

12. Verfahren nach einem der vorstehenden Ansprüche, **dadurch gekennzeichnet, dass** die Verseifung so lange fortgesetzt wird, bis eine Zusammensetzung mit einem Trockensubstanzgehalt von zumindest 40 Gew.-%, a meisten bevorzugt zwischen 50 und 60 Gew.-% erreicht wird, wobei die Fettsäureseife zumindest 20 Gew.-%, mehr bevorzugt zumindest mehr als 50 Gew.-%, insbesondere etwa 80 bis 99 Gew.-% der Trockensubstanz ausmacht.

13. Verfahren nach einem der vorstehenden Ansprüche, **dadurch gekennzeichnet, dass** zumindest 80 Gew.-%, mehr bevorzugt zumindest 90 Gew.-% der Säuren verseift sind.

14. Verfahren nach einem der vorstehenden Ansprüche, **dadurch gekennzeichnet, dass** eine Zusammensetzung zurückgewonnen wird, bei welcher es sich um eine Zusammensetzung handelt, welche durch Verseifung von Fett- und Harzsäuren erhalten wird und welche 0,5 bis 95 Gew.-%, insbesondere etwa 1 bis 35 Gew.-% verseifte Harzsäuren umfasst.

15. Verfahren nach einem der vorstehenden Ansprüche, **dadurch gekennzeichnet, dass** die Seife aus Fett- und Harzsäuren aus Tallöl hergestellt wird, wobei die Fett- und Harzsäuren umfassende Tallölzusammensetzung mit einem Alkali verseift wird.

16. Verfahren nach einem der vorstehenden Ansprüche, **dadurch gekennzeichnet, dass** die Zusammensetzung auf einen Trockensubstanzgehalt von 95 bis 100 Gew.-% getrocknet wird.

17. Zusammensetzung, hergestellt nach einem Verfahren nach einem der Ansprüche 1 bis 16, umfassend Fett- und Harzsäureseife, mit einem Trockensubstanzgehalt von 60 bis 70 Gew.-% und umfassend 10 bis 20 Gew.-% eines polaren Lösungsmittels, bezogen auf das Gesamtgewicht der Zusammensetzung, wobei das polare Lösungsmittel ein aliphatischer oder aromatischer Alkohol oder ein Keton ist, wie ein aliphatischer niederer Alkohol oder ein aliphatisches niederes Keton, zum Beispiel ein_{C1}-_{C4-}Alkohol, insbesondere Methanol, Ethanol, Propanol oder Butanol oder Aceton.

18. Zusammensetzung nach Anspruch 17, **dadurch gekennzeichnet, dass** sie einen Trockensubstanzgehalt von 95 bis 100 Gew.-% aufweist.

19. Zusammensetzung nach Anspruch 17 oder 18, **dadurch gekennzeichnet, dass** die Zusammensetzung 0,5 bis 95 Gew.-%, insbesondere etwa 1 bis 35 Gew.-% verseifte Harzsäuren umfasst.

20. Zusammensetzung nach einem der Ansprüche 17 bis 19, **dadurch gekennzeichnet, dass** sie durch ein Verfahren nach einem der Ansprüche 1 bis 16 erhalten wird.

21. Verwendung einer nach einem der Ansprüche 1 bis 16 hergestellten Zusammensetzung oder einer Zusammensetzung nach einem der Ansprüche 17 bis 20 als Desinfektionsmittel oder Antiseptikum oder als ein Konzentrat davon.

22. Verwendung nach Anspruch 21, **dadurch gekennzeichnet, dass** die verwendete Zusammensetzung Ethanol oder eine entsprechende biokompatible Substanz als Lösungsmittel umfasst.

## Revendications

1. Procédé de fabrication d'un savon à partir d'acides gras et résiniques, selon lequel procédé une composition comprenant des acides gras et résiniques est saponifiée avec un alcali, **caractérisé en ce que**
- une solution alcaline comprenant de l'eau, un solvant polaire choisi parmi un alcool aliphatique ou aromatique ou une cétone, et une base, est formée, et
- une composition d'acides gras comprenant des acides résiniques est ajoutée à la solution alcaline afin de dissoudre les acides contenus dans celle-ci dans la solution alcaline, selon lequel la teneur en eau du mélange formé par la solution alcaline et la composition d'acides gras est 1 à 30 % en poids.

2. Procédé selon la revendication 1, **caractérisé en ce qu'**une saponification est poursuivie jusqu'à ce qu'au moins 50 % en poids, de préférence plus de 80 % en poids, le plus préférentiellement plus de 95 % en poids des acides résiniques et des acides gras aient été saponifiés.

3. Procédé selon la revendication 1 ou 2, **caractérisé en ce que** la composition d'acides gras est ajoutée sous agitation vigoureuse dans la solution alcaline et l'agitation est, de préférence, poursuivie jusqu'à ce qu'une proportion significative des acides gras soit saponifiée.

4. Procédé selon l'une quelconque des revendications 1 à 3, **caractérisé en ce que** la composition d'acides gras comprenant des acides résiniques est une composition comprenant des acides gras d'origine végétale ou animale, telle qu'une huile de colza, une huile de palme, une huile d'olive, ou une composition comprenant des acides gras de tallôl, ou un mélange de ceux-ci.

5. Procédé selon l'une quelconque des revendications précédentes, **caractérisé en ce que** le solvant polaire utilisé pour former la solution alcaline est un alcool inférieur aliphatique ou une cétone inférieure aliphatique, par exemple un alcool en C₁-C₄, en particulier le méthanol, l'éthanol, le propanol ou le butanol, ou une acétone.

6. Procédé selon l'une quelconque des revendications précédentes, **caractérisé en ce que** l'alcali utilisé pour former la solution alcaline est un hydroxyde, tel que NaOH ou KOH, un hydrure métallique, tel que NaH, ou un éthylate ou un méthylate, tel que CH₃ONa.

7. Procédé selon l'une quelconque des revendications précédentes, **caractérisé en ce que** la viscosité dynamique du mélange formé par la solution alcaline et la composition d'acides gras lors de la saponification est inférieure ou égale à 1000 mPa·s, en particulier inférieure ou égale à 600 mPa·s, de manière la plus appropriée inférieure ou égale à 200 mPa·s.

8. Procédé selon l'une quelconque des revendications précédentes, **caractérisé en ce que** la teneur en eau du mélange formé par la solution alcaline et la composition d'acides gras est 6 à 20 % en poids, en particulier 8 à 15 % en poids du poids total de la composition.

9. Procédé selon l'une quelconque des revendications précédentes, **caractérisé en ce que** la teneur en solvant du mélange formé par la solution alcaline et la composition d'acides gras est 15 à 50 % en poids, le plus préférentiellement 15 à 40 % en poids, en particulier 20 à 30 % en poids du poids total de la composition.

10. Procédé selon l'une quelconque des revendications précédentes, **caractérisé en ce que** la composition d'acides gras est ajoutée à la solution alcaline, qui est soumise à des forces de cisaillement élevées.

11. Procédé selon l'une quelconque des revendications précédentes, **caractérisé en ce que** l'alcool de la solution alcaline n'est pas essentiellement consommé pendant la saponification, et que l'alcool joue le rôle de solvant pour la saponification et est totalement ou partiellement éliminé, ou recyclé après la réaction.

12. Procédé selon l'une quelconque des revendications précédentes, **caractérisé en ce que** la saponification est poursuivie jusqu'à ce qu'une composition soit obtenue, présentant une teneur en matière sèche d'au moins 40 % en poids, le plus préférentiellement entre 50 et 60 % en poids, dont le savon d'acide gras constitue au moins 20% en poids, plus préférentiellement au moins plus de 50% en poids, en particulier environ 80 à 99 % en poids de matière sèche.

13. Procédé selon l'une quelconque des revendications précédentes, **caractérisé en ce qu'**au moins 80 % en poids, le plus préférentiellement, au moins 90 % en poids des acides sont saponifiés.

14. Procédé selon l'une quelconque des revendications précédentes, **caractérisé en ce qu'**une composition est récupérée qui est une composition obtenue à partir de la saponification d'acides gras et résiniques, et qui comprend 0,5 à 95 % en poids, en particulier environ 1 à 35 % en poids d'acides résiniques saponifiés.

15. Procédé selon l'une quelconque des revendications précédentes, **caractérisé en ce que** le savon est fabriqué à partir d'acides gras et résiniques de tallôl, dans lequel la composition de tallôl comprenant des acides gras et résiniques est saponifiée avec un alcali.

16. Procédé selon l'une quelconque des revendications précédentes, **caractérisé en ce que** la composition est séchée jusqu'à une teneur en matière sèche de 95 à 100 % en poids.

17. Composition fabriquée selon un procédé selon l'une quelconque des revendications 1 à 16, comprenant un savon d'acides gras et résiniques, présentant une teneur en matière sèche de 60 à 70 % en poids et comprenant 10 à 20 % en poids d'un solvant polaire sur la base du poids total de la composition, dans laquelle le solvant polaire est un alcool aliphatique ou aromatique ou une cétone, tel qu'un alcool inférieur aliphatique ou une cétone inférieure aliphatique, par exemple un alcool en C₁-C₄, en particulier le méthanol, l'éthanol, le propanol ou le butanol ou une acétone.

18. Composition selon la revendication 17, **caractérisée en ce qu'**elle présente une teneur en matière sèche de 95 à 100 % en poids.

19. Composition selon la revendication 17 ou 18, **caractérisée en ce que** la composition comprend 0,5 à 95 % en poids, en particulier environ 1 à 35 % en poids d'acides résiniques saponifiés.

20. Composition selon l'une quelconque des revendications 17 à 19, **caractérisée en ce qu'**elle est obtenue par un procédé selon l'une quelconque des revendications 1 à 16.

21. Utilisation d'une composition fabriquée selon l'une quelconque des revendications 1 à 16 ou d'une composition selon l'une quelconque des revendications 17 à 20 comme agent désinfectant ou antiseptique ou comme concentré de celui-ci.

22. Utilisation selon la revendication 21, **caractérisée en ce que** la composition qui est utilisée, comprend de l'éthanol ou une substance biocompatible correspondante comme solvant.
